# EUROPÄISCHE PATENTSCHRIFT

(11) **EP 4 107 504 B1**
(45) Veröffentlichungstag und Bekanntmachung des Hinweises auf die Patenterteilung: **31.01.2024**
(21) Anmeldenummer: 21712011.2
(22) Anmeldetag: 12.02.2021
(51) Int. Cl.: G01M 99/00, A47K 3/28

(54) **NOTFALLDUSCHEN-PRÜFGERÄT**
EMERGENCY SHOWER TEST DEVICE
APPAREIL DE CONTRÔLE DE DOUCHES D'URGENCE

(30) Priorität: 21.02.2020 DE 102020104591
(43) Veröffentlichungstag der Anmeldung: 28.12.2022
(73) Patentinhaber: Alfred-Wegener-Institut Helmholtz-Zentrum für Polar- und Meeresforschung, 27570 Bremerhaven (DE)
(72) Erfinder: BOCHERT, Thore, 27570 Bremerhaven (DE); LEMBURG, Johannes, 27568 Bremerhaven (DE)
(86) Internationale Anmeldenummer: PCT/DE2021/100141
(87) Internationale Veröffentlichungsnummer: WO 2021/164823

(56) Entgegenhaltungen:
- DE-U1-202009 016 338
- SG-A1- 182 123
- US-A1- 2018 052 020
- US-A1- 2019 301 982

## Beschreibung

Die Erfindung bezieht sich auf ein Notfallduschen-Prüfgerät mit einem Auffangbehälter und einem Einlaufrohr, das an seinem oberen Ende eine Aufnahme für den Kopf einer zu prüfenden Notfalldusche aufweist, an seinem unteren Ende in den Auffangbehälter mündet und mittels einer arretierbaren Verstelleinrichtung höhenverstellbar ausgebildet ist, wobei das Einlaufrohr weitgehend in den Auffangbehälter einfahrbar ist, und mit einer im unteren Bereich des Auffangbehälters angeordneten Ablaufvorrichtung zur Entleerung des Auffangbehälters.

In einigen Betrieben kann für die Mitarbeiter die Gefahr von Verbrennung, Verbrühung oder Verätzung bestehen. Insbesondere beim Hantieren mit Gefahrstoffen können trotz aller Sicherheitsmaßnahmen unerwünschte Kontaminationen am Menschen auftreten. Um diese umgehend entfernen zu können, werden Notfallduschen eingesetzt. Hierbei kann es sich um stationäre oder mobile Systeme mit einfacher Funktion (für den ganzen Körper - Wasserstrahl ist nach unten gerichtet, nur für die Augen - Wasserstrahl ist nach oben gerichtet) oder kombinierter Funktion handeln. Die Versorgung mit Wasser kann aus Vorratsbehältern oder aus Leitungen erfolgen. Allen Notfallduschen ist gemeinsam, dass sie in der Regel nur selten genutzt werden. Tritt aber doch ein Notfall ein, müssen sie sofort zuverlässig einsatzfähig sein. Deshalb müssen Notfallduschen regelmäßig auf ihre Funktionsfähigkeit hin überprüft werden, was in gesetzlichen Vorschriften und Normen geregelt ist. Dabei werden unterschiedliche Parameter des ausströmenden Wassers (beispielsweise Volumenstrom, Temperatur, Sauberkeit, Bakteriengehalt) überprüft, wozu ein Prüfgerät eingesetzt wird. Am Markt existieren einige Anbieter für solche Notfallduschen-Prüfgeräte.

### Stand der Technik

Ein mobiles Notfallduschen-Prüfgerät, das den der Erfindung nächstliegenden Stand der Technik darstellt, wird in der DE 20 2009 016 338 U1 offenbart. Beschrieben wird eine Anordnung mit einem transparenten Auffangbehälter, der auf einer rollbaren Bodenplatte angeordnet ist. Der Auffangbehälter ist an seiner oberen Stirnseite verschlossen und nimmt dort ein Einlaufrohr auf. Über eine arretierbare Verstelleinrichtung ist das Einlaufrohr höhenverstellbar. Dazu wird eine Quetschverschraubung im Bereich der Stirnseite des Auffangbehälters gelöst, das Einlaufrohr an seinem Umfang mit den Händen gegriffen und in die gewünschte Höhe herauf- oder heruntergeschoben. Anschließend wird es in dieser Position mittels der Quetschverschraubung arretiert. Die einzustellende Höhe richtet sich nach der Montagehöhe des Duschkopfs der zu überprüfenden Notfalldusche. Für den Transport des Prüfgeräts ist das Einlaufrohr nahezu vollständig in den Auffangbehälter einfahrbar. Zur möglichst spritzwasserfreien Aufnahme des Duschkopfs weist das bekannte Prüfgerät am oberen Ende des Einlaufrohrs, das selbst einen relativ kleinen Durchmesser aufweist, eine Aufnahme in Form eines Trichters für den Kopf der zu prüfenden Notfalldusche auf. Im unteren Bereich des Auffangbehälters ist eine Pumpe angeordnet, mittels der das eingelaufene Wasser ausgepumpt wird. Aufgrund der abgeschlossenen Ausbildung des Auffangbehälters ist eine Belüftung vorgesehen.

Aus der US 2019/0301982 A1 ist ein höhenverstellbares Notfallduschen-Prüfgerät bekannt, bei dem ein schalenartiges Gefäß als Aufnahme auf einem ersten Schaft angeordnet ist. Der erste Schaft wird teleskopartig in einem hohlen, zweiten Schaft geführt. Eine Höhenverstellung erfolgt über eine Klemmschraube am zweiten Schaft, die in einem Langloch am ersten Schaft geführt ist. Ein ähnliches Prüfgerät ist aus der US 2018/0052020 A1 bekannt. Die Aufnahme ist hier als Trichter mit einem Rohrstutzen ausgebildet. Dieser wird auf einem zweiten Rohr höhenverstellbar geführt. Die Höhenfixierung erfolgt über Klemmhebel am Rohrstutzen.

Aus der WO 2004/071263 A1 ist ein Notfallduschen-Prüfgerät mit einem Vorhang anstelle eines Einlaufrohrs bekannt. Der Vorhang läuft auf einer kreisförmigen Schiene, die höhenverstellbar ist, und umgibt im Prüffall die Notfalldusche in zylindrischer Weise völlig.

Schließlich ist aus der DE 10 2015 106 857 B4 noch ein Prüfgerät für eine Augendusche bekannt, bei der eine Abdeckhaube zur Vermeidung von Spritzwasser des nach oben abstrahlenden Wasserstrahls eingesetzt wird. Bei Augenduschen ist auch das Abstrahlmuster regelmäßig zu überprüfen.

### Aufgabenstellung

Ausgehend von dem gattungsgemäßen Notfallduschen-Prüfgerät gemäß dem weiter oben beschriebenen nächstliegenden Stand der Technik ist die **Aufgabe** für die vorliegende Erfindung darin zu sehen, dieses so weiterzubilden, dass eine einfache Handhabung ohne großen Kraftaufwand unter größtmöglicher Spritzsicherheit ermöglicht wird. Die **Lösung** für diese Aufgabe ist dem Hauptanspruch zu entnehmen. Vorteilhafte Modifikationen der Erfindung werden in den Unteransprüchen aufgezeigt und im Folgenden zusammen mit der Erfindung näher beschrieben.

Erfindungsgemäß ist bei dem beanspruchten Notfallduschen-Prüfgerät vorgesehen, dass die Aufnahme in das obere Ende des Einlaufrohrs integriert ist, wobei das Einlaufrohr einen solchen konstanten Durchmesser aufweist, dass es den Kopf der Notfalldusche vollständig aufnehmen kann, dass die Verstelleinrichtung ein umgelenktes Seil mit einem Gegengewicht umfasst, das an das Gewicht des Einlaufrohrs angepasst ist, und dass ein Gestell vorgesehen ist, in dem der Auffangbehälter erhöht angeordnet ist, wobei die Ablaufvorrichtung ausschließlich auf der Schwerkraft basiert.

Bei dem mit der Erfindung beanspruchten Notfallduschen-Prüfgerät weist das Einlaufrohr einen solchen Durchmesser auf, dass es jeden Duschkopf vollständig aufnehmen kann. Dadurch werden schwere, sperrige Elemente, wie beispielsweise Trichter oder Vorhänge, vermieden. Das Einlaufrohr ist - auch im ausgefahrenen Zustand - stabil. Gerade große Trichter, die auf relativ dünne Einlaufrohre geschraubt werden, führen zu Instabilitätsproblemen bei ausgefahrenem Einlaufrohr. Desweiteren versperren sie die Sicht, sind ein Anstoßhindernis und bedingen aufgrund ihres Gewichts eine erschwerte Handhabung. Diese wird bei der Erfindung durch eine Verstelleinrichtung mit einem umgelenkten Seil und einem Gegengewicht bedeutsam erleichtert. Bei der Höhenverstellung des Einlaufrohres ist somit nicht mehr dessen Eigengewicht zu verschieben. Dieses wird vielmehr durch das Gegengewicht, das an das Gewicht des Einlaufrohrs angepasst ist, kompensiert. Die manuelle Verschiebung kann durch weitgehend kraftfreies Herauf- oder Herunterziehen des Seils an der Außenseite des Auffangbehälters erfolgen. Dieser wiederum ist in einem Gestell erhöht angeordnet. Das aufgefangene Wasser kann somit leicht über die Ablaufvorrichtung im unteren Bereich des Auffangbehälters abgelassen werden. Treibende Kraft ist dabei ausschließlich die Schwerkraft. Eine Lenzpumpe oder eine elektrische Pumpe und eine Batterie oder ein Stromanschluss werden nicht benötigt. Durch die genannten Maßnahmen wird ein völlig autarker Prüfwagen für Notfallduschen zur Verfügung gestellt, der besonders leicht zu handhaben ist. Insbesondere wird zum Betrieb weder Muskelkraft noch elektrische Energie benötigt.

Die integrierte Aufnahme am oberen Ende des Einlaufrohrs soll den Duschkopf vollständig aufnehmen. Ihre Höhenpositionierung richtet sich daher nach der Montagehöhe oder Anordnung des Duschkopfs bei Ganzkörper-Notfallduschen. In der Regel ist die Montagehöhe oder Anordnung so gewählt, dass das Einlaufrohr einstückig ausgebildet sein kann. Im voll ausgefahrenen Zustand kann es dann mit seiner integrierten Aufnahme den Duschkopf aufnehmen. Bei höheren Montagehöhen des Duschkopfs ist es allerdings vorteilhaft und bevorzugt, wenn gemäß einer ersten Modifikation des mit der Erfindung beanspruchten Prüfgeräts vorgesehen ist, dass das Einlaufrohr aus zumindest zwei konzentrischen Teilrohren aufgebaut ist, die teleskopartig ein- und ausfahrbar ausgebildet sind, wobei das innere Teilrohr die Aufnahme umfasst und das Seil der Verstelleinrichtung mit beiden Teilrohren verbunden ist. Beide Teilrohre werden gemeinsam über die Verstelleinrichtung ein- und ausgefahren. Dabei ist durch das Vorsehen des Gegengewichts, dessen Gewicht auf das Gewicht des Einlaufrohrs und damit auch auf die zwei Teilrohre, die gemeinsam das Einlaufrohr bilden, ausgelegt ist, in der Verstelleinrichtung wiederum kein großer Kraftaufwand nötig. Im ausgefahrenen Zustand können besonders hoch angebrachte Duschköpfe von Notfallduschen erreicht, umschlossen und geprüft werden. Die Aufnahme befindet sich - im ausgefahrenen Zustand - im obersten Teilrohr, dessen Durchmesser entsprechend groß bemessen ist. Im eingefahrenen Zustand stecken alle Teilrohre ineinander und sind im Bereich des Auffangbehälters angeordnet, sodass die Kompaktheit des Prüfgeräts für den Transport und die Lagerung erhalten bleibt.

Zur Kompaktheit trägt auch bei, dass der Auffangbehälter das Einlaufrohr gut aufnehmen kann. Dazu ist es gemäß einer nächsten Erfindungsausgestaltung vorteilhaft und bevorzugt, wenn der Auffangbehälter zylindrisch und an seinem oberen Ende offen ausgebildet ist. In seinem Volumen ist der Auffangbehälter so zu bemessen, dass er das Wasser zumindest eines Prüfvorgangs sicher aufnehmen kann. Zu bevorzugen ist die Wassersammlung von mehreren Prüfvorgängen, da dann nicht nach jedem Prüfvorgang entleert werden muss.

Durch die Offenheit des Auffangbehälters nach oben hin ist es auch nicht erforderlich, spezielle Entlüftungsvorrichtungen vorzusehen. Im Inneren des Auffangbehälters herrscht immer Umgebungsdruck.

Da das Prüfgerät so kompakt und leicht wie möglich gestaltet sein soll, werden Komponenten eingesetzt, die dem Leichtbau zuzuordnen sind. Das Einlaufrohr ist dünnwandig und aus Kunststoff. Um beim Aus- und Einfahren trotzdem eine gute mechanische Stabilität zu erreichen, ist es bevorzugt und vorteilhaft, wenn gemäß einer nächsten Erfindungsausgestaltung Gleit- und Zentrierblöcke zwischen dem Einlaufrohr und dem Auffangbehälter angeordnet sind. Dadurch können Einlaufrohr und Auffangbehälter konzentrisch zueinander geführt werden, ohne zu verkanten oder zu blockieren. Gleichzeitig wird ein gutes Gleiten erreicht. Weiterhin können die Blöcke auch als Anschlag benutzt werden, damit das Einlaufrohr nicht versehentlich aus dem Auffangbehälter völlig herausgezogen wird. Auch bei einer Verwendung eines Einlaufrohrs aus mehreren konzentrischen Teilrohren, ist es aus denselben Gründen vorteilhaft und bevorzugt, Gleit- und Zentrierstücke auch zwischen diesen anzuordnen. Nähere Einzelheiten hierzu können den Ausführungsbeispielen entnommen werden.

Damit das beanspruchte Prüfgerät weitgehend spritzsicher angewendet werden kann, ist es bei der Erfindung erforderlich, dass der Duschkopf vollständig von der integrierten Aufnahme im Einlaufrohr aufgenommen werden kann. Insbesondere, wenn sich der Duschkopf in größeren Montagehöhen befindet, ist eine Kontrolle der richtigen Positionierung und vollständigen Aufnahme nicht immer einfach. Deshalb ist es gemäß einer nächsten Erfindungsmodifikation bevorzugt und vorteilhaft, wenn zumindest die in das Einlaufrohr integrierte Aufnahme transparent ausgebildet ist. Die integrierte Aufnahme kann dann einfach vom Boden aus beobachtet und vollständig über den Duschkopf geschoben werden. Gleichzeitig kann auch das einlaufende Wasser auf sein Strahlmuster und auf seine Farbe und Konsistenz (Wasserqualität) hin beobachtet werden. Diese Beobachtbarkeit wird noch verbessert, wenn das gesamte Einlaufrohr bzw. seine Teilrohre vollständig transparent sind. Weiterhin ist es auch vorteilhaft und bevorzugt, wenn der Auffangbehälter zumindest teilweise transparent ausgebildet ist. Das aufgefangene Wasser kann dann beispielsweise durch ein Sichtfenster auf den Wasserstand im Auffangbehälter und auf Trübung und Farbe (Wasserqualität) hin untersucht werden. Insbesondere, wenn der Auffangbehälter vollständig transparent ist, kann der Füllstand im Behälter besonders einfach überwacht werden, beispielsweise mit einer einfachen Skala auf dem Auffangbehälter. Entsprechende Kunststoffrohre und -behälter sind handelsüblich beziehbar.

Bei dem mit der Erfindung beanspruchten Prüfgerät muss zur Aufnahme des Duschkopfs in die Aufnahme des Einlaufrohres keine anstrengende Muskelkraft eingesetzt werden. Dazu ist eine Verstelleinrichtung mit einem umgelenkten Seil und einem Gegengewicht vorgesehen, wobei das Gegengewicht gewichtsmäßig auf das Gewicht des Einlaufrohrs abgestimmt ist. Der Anwender kann beispielsweise das Einlaufrohr mit beiden Händen packen und ohne Kraftaufwand nach oben aus dem Auffangbehälter herausgleiten lassen. Noch einfacher ist es, wenn gemäß einer nächsten Erfindungsfortführung bevorzugt und vorteilhaft vorgesehen ist, dass das Seil der Verstelleinrichtung als Handgriff für Höhenverstellung des Einlaufrohrs dient und/oder mittels einer Curryklemme arretierbar ist. Das Seil verläuft an der Außenseite des Auffangbehälters. Es kann einfach gegriffen und nach oben oder unten gezogen werden und dient deshalb auch gleichzeitig als Handgriff für die Höhenverstellung. Durch die einsehbare Konstruktion können auch nichtkundige Bediener das Funktionsprinzip erkennen und nutzen. Die Arretierung des Seils im ausgefahrenen Zustand des Einlaufrohrs kann bevorzugt und vorteilhaft über eine einfache Curryklemme (auch als Schotklemme beim Segeln bekannt) erfolgen. Derartige Klemmen weisen zwei Backen mit schrägen Rückhalteabsätzen auf, wobei die Backen einander gegenüberliegen und einen sich verengenden Schlitz zwischen sich bilden. Die Klemmung beim Ausziehen des Einlaufrohrs erfolgt automatisch, wenn das Seil die ganze Zeit durch die Curryklemme gezogen wird. Durch die Klemmung wird im ausgefahrenen Zustand des Einlaufrohrs verhindert, dass dieses versehentlich durch Wasserreibung oder Ähnliches wieder nach unten gedrückt wird, sodass Wasser austreten könnte. Um das Einlaufrohr wieder einzufahren, wird das Seil aus der Curryklemme herausgezogen und abgelassen. Eine Sicherung ist im eingefahrenen Zustand des Einlaufrohrs nicht erforderlich, zumal die Curryklemme das Seil nur in einer Zugrichtung blockiert.

Das Gegengewicht ist in seiner Gewichtskraft auf das zu verschiebende Einlaufrohr abgestimmt, damit eine nahezu vollständige Gewichtskompensation stattfinden kann. Bevorzugt und vorteilhaft ist es dabei, wenn das Gegengewicht zwischen Führungsschienen am Gestell vertikal verschieblich angeordnet ist. Dadurch ist das Gegengewicht sicher geführt, und es entstehen keine Behinderungen durch Pendelbewegungen des Gewichts. Das Seil kann sich nicht verfangen. Desweiteren kann bei dem mit der Erfindung beanspruchten Prüfgerät vorgesehen sein, dass die Ablaufvorrichtung einen Ablaufschlauch mit einem großen Durchmesser und einem Absperrventil an seinem freien Ende umfasst. Durch den großen Durchmesser kann das Wasser ungehindert aus dem Auffangbehälter ausströmen, beispielsweise in einen Bodeneinlauf, in den das offene Schlauchende gehalten wird. Damit bis zum Einstecken in den Bodenablauf das Wasser zurückgehalten wird, kann ein Absperrventil, beispielsweise ein Kugelhahn, am offenen Schlauchende vorgesehen sein. Dadurch kann der Schlauch an diesem Ende einfach verschlossen oder geöffnet werden.

Gemäß einer nächsten Erfindungsausgestaltung kann auch bevorzugt und vorteilhaft vorgesehen sein, dass das Gestell eine Bodenplatte mit feststellbaren Lenkrollen, einen weiteren Handgriff und verschiedene Halterungen für weitere Gerätschaften und Informationsmaterial umfasst. Durch die Lenkrollen und den weiteren Handgriff kann das Prüfgerät optimal manövriert werden, sodass auch schwerer zugängliche Stellen einfach erreicht werden können. Die Feststellung der Lenkrollen sorgt für eine sichere Positionierung unterhalb des Duschkopfs im Prüfbetrieb. Schließlich können weitere Halterungen, beispielsweise für einen Messbecher, einen Wischmopp, einen Eimer, das Absperrventil des Ablaufschlauchs oder für Informationsmaterial zum Betrieb des Prüfgeräts oder zur Aufklärung über die Prüfungspflicht o. ä., am Gestell vorgesehen sein. Nähere Einzelheiten hierzu können auch den Ausführungsbeispielen entnommen werden.

Ein relevanter Prüfparameter ist insbesondere der aus der geprüften Notfalldusche ausfließende Volumenstrom des Wassers. Dazu ist es vorteilhaft, wenn ein Kurzzeitmesser und eine Füllstandsanzeige am Auffangbehälter angeordnet sind. Mithilfe der gemessenen Zeit und dem bekannten Wasservolumen, das direkt über die Füllstandsanzeige ermittelt werden kann, kann in einfacher Weise der Volumenstrom ermittelt und mit den gesetzlichen Vorgaben verglichen werden.

Die zuvor gemachten Ausführungen beziehen sich zumeist auf das Prüfen von Ganzkörper-Notfallduschen. Mit dem mit der Erfindung beanspruchten Prüfgerät können aber auch Augenduschen getestet werden. Bei diesen erfolgt die Wasserabstrahlung nach oben (in die darüber gehaltenen Augen des Nutzers hinein). Insbesondere ist bei diesen Notfallduschen auch das Abstrahlmuster zu beurteilen. Dafür wird bei dem mit der Erfindung beanspruchten Prüfgerät die Augendusche einfach in die Aufnahme des (nicht ausgefahrenen) Einlaufrohrs manuell hineingehalten oder auf einem Sieb abgelegt. Um ein Spritzen des Wassers über das Einlaufrohr hinaus zu vermeiden, ist es bevorzugt und vorteilhaft, wenn eine Abdeckhaube für die in das Einlaufrohr integrierte Aufnahme vorgesehen ist. Diese wird einfach über die im Einlaufrohr positionierte Augendusche gehalten und sorgt für eine Reflexion des abgestrahlten Wassers in das Innere des Einlaufrohrs. Da Augenduschen oft über einen nur sehr kurzen Anschlussschlauch verfügen, kann alternativ eine Augendusche auch einfach mit dem mit der Erfindung beanspruchten Prüfgerät bevorzugt vorgesehenen Messbecher erfolgen. Dieser wird über einem Waschbecken einfach über die nach oben abstrahlende Augendusche gehalten und dabei das Wasserstrahlmuster kontrolliert werden. Anschließend wird für eine vorgegebene Zeit das abgestrahlte Wasser in den Messbecher gefüllt und auf seine Menge kontrolliert. Nähere Details zu den oben beschriebenen Modifikationen der Erfindung sind den nachfolgenden Ausführungsbeispielen zu entnehmen.

### Ausführungsbeispiele

Das Notfallduschen-Prüfgerät nach der Erfindung und seine vorteilhaften Modifikationen werden anhand der schematischen, nicht maßstäblichen **Figuren** zum besseren Verständnis nachfolgend noch weitergehend erläutert. Im Einzelnen zeigt die
- **Figur 1**: eine perspektivische Vorderansicht mit eingefahrenem Einlaufrohr,
- **Figur 2**: eine perspektivische Rückansicht mit ausgefahrenem Einlaufrohr,
- **Figur 3**: eine perspektivische Vorderansicht mit eingefahrenem Einlaufrohr aus zwei Teilrohren,
- **Figur 4**: eine perspektivische Rückansicht mit eingefahrenem Einlaufrohr aus zwei Teilrohren,
- **Figur 5**: eine perspektivische Vorderansicht mit teilweise ausgefahrenem Einlaufrohr aus zwei Teilrohren und
- **Figur 6**: eine perspektivische Vorderansicht mit ausgefahrenem Einlaufrohr aus zwei Teilrohren.

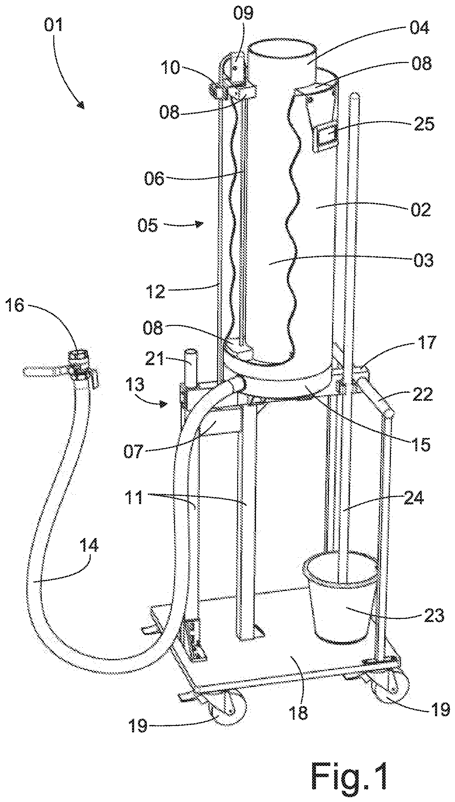

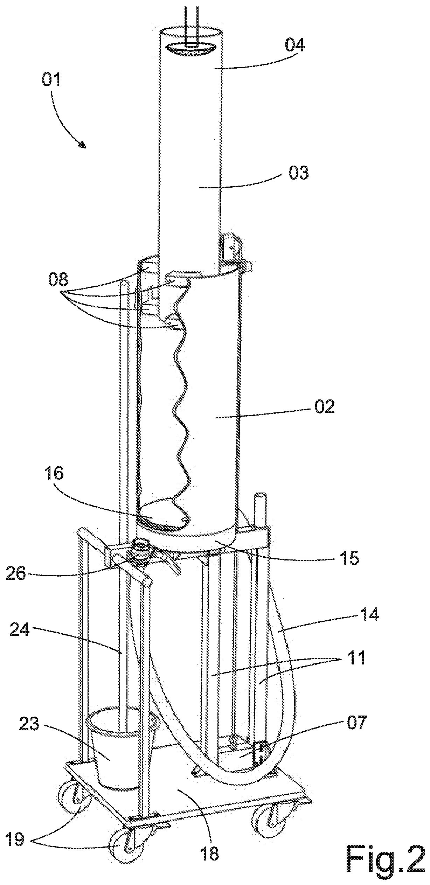

In der **Figur 1** ist ein Notfallduschen-Prüfgerät **01** mit einem Auffangbehälter **02** und einem, mit seinem unteren Ende in den Auffangbehälter **02** mündenden Einlaufrohr **03** in der perspektivischen Ansicht schematisch dargestellt. Das Einlaufrohr **03** ist vollständig eingefahren. Auffangbehälter **02** und Einlaufrohr **03** sind zylindrisch und komplett aus transparentem Kunststoff ausgebildet. Der Auffangbehälter **02** ist an seinem oberen Ende offen und an seinem unteren geschlossen ausgebildet. Das Einlaufrohr **03** ist an beiden Enden offen ausgebildet. Der Auffangbehälter **02** ist teilweise aufgebrochen gezeigt, um das Einlaufrohr **03** besser sichtbar zu machen, welches im eingefahrenen Zustand dargestellt ist. Es ist gut zu erkennen, dass das Einlaufrohr **03** in diesem Zustand nahezu vollständig vom Auffangbehälter **02** umgeben ist, wodurch sich eine sehr kompakte Anordnung ergibt, die einfach zu transportieren und zu lagern ist. An seinem oberen Ende weist das Einlaufrohr **03** eine integrierte Aufnahme **04** für den Kopf einer zu prüfenden Notfalldusche (dargestellt in **Figur 2**) auf. Dabei ist der Durchmesser der Aufnahme **04** bzw. des Einlaufrohrs **03** so bemessen, dass der komplette Duschkopf umfasst werden kann. Seitliches Austreten von Spritzwasser ist so vollständig vermieden.

Über eine Verstelleinrichtung **05** ist das Einlaufrohr **03** höhenverstellbar an dem Auffangbehälter **02** gelagert. Dazu umfasst die Verstelleinrichtung **05** ein umgelenktes Seil **06** und ein Gegengewicht **07,** das an das Gewicht des Einlaufrohrs **03** angepasst ist. Im vollständig eingefahrenen Zustand des Einlaufrohrs **03** befindet sich das Gegengewicht **07** an seiner höchsten Position. Am Einlaufrohr **03** sind mehrere Gleit- und Zentrierblöcke **08** angeordnet. Im gezeigten Ausführungsbeispiel sind drei Gleit- und Zentrierblöcke **08** gleichmäßig am Umfang des Einlaufrohrs **03** in seinem unteren Bereich angeordnet. Weiterhin sind drei Gleit- und Zentrierblöcke **08** gleichmäßig auf der Innenseite des Auffangbehälters **02** in dessen oberen Bereich angeordnet. Die Gleit- und Zentrierblöcke **08** sorgen für eine konzentrische Ausrichtung von Auffangbehälter **02** und Einlaufrohr **03** und gewährleisten dessen gutes Ein- und Ausfahren. Das Seil **06** ist an einem der drei Gleit- und Zentrierblöcke **08** des Einlaufrohrs **02** befestigt und wird über einen Umlenkblock **09** oberhalb des zugeordneten Gleit- und Zentrierblock **08** (axiale Ausrichtung, damit das Seil **06** vertikal verläuft) auf der Innenseite des Auffangbehälters **02** über dessen Rand umgelenkt. An der Außenseite des Auffangbehälter **02** verläuft das Seil **06** bis zum Gegengewicht **07**. Im Bereich des Gleit- und Zentrierblocks **08** befindet sich auf der Außenseite des Auffangbehälters **02** eine Curryklemme **10** (Schotklemme), in der das Seil **06** beim Ausfahren des Einlaufrohrs **03** automatisch festgelegt ist. Das Ausfahren (wenn das Seil **06** durch die Curryklemme **10** nach unten gezogen wird) wird unterstützt durch das Gegengewicht **07,** das unter Schwerkrafteinfluss nach unten gleitet. Durch das nach unten gefahrene Gegengewicht **07** und die Curryklemme **10** ist das Seil **06** bzw. das Einlaufrohr **03** in der ausgefahrenen Position sicher fixiert. Zur Höhenveränderung (Einfahren des Einlaufrohrs **03** in den Auffangbehälter **02**) wird das Seil **06** aus der Curryklemme **10** herausgezogen. Wenn das Einlaufrohr **03** völlig in den Auffangbehälter **02** eingefahren ist (Aufsetzen auf den Doppelboden **15,** siehe unten), ist eine Arretierung nicht erforderlich. Durch sein Eigengewicht hält das Einlaufrohr **03** das Gegengewicht **07** in dessen oberer Position. Das Gegengewicht **07** wird zwischen zwei Führungsschienen **11** vertikal sicher geführt. Zur Verstellung des Einlaufrohrs **03,** bei der das Seil **06** an der Außenseite des Auffangbehälters **02** wie ein Handgriff **12** genutzt wird, ist keine externe Energiezufuhr (Muskelkraft, Motor) erforderlich. Das Herausfahren des Einlaufrohrs **03** wird durch das Gegengewicht **07** unterstützt. Das Einfahren des Einlaufrohrs **03** wird durch sein eigenes Gewicht unterstützt.

Im unteren Bereich weist der Auffangbehälter **02** eine Ablaufvorrichtung **13** zum Entleeren auf. Diese arbeitet ebenfalls ausschließlich mit Schwerkraft. Eine elektrische Pumpe wird nicht benötigt. Im gezeigten Ausführungsbeispiel ist ein Ablaufschlauch **14** mit einem relativ großen Querschnitt (ungehinderter Wasserablauf) an einen Doppelboden **15** radial angeschlossen. Der Doppelboden **15** bildet den unteren Abschluss des Auffangbehälters **02** und hat zu diesem hin eine zentrale Öffnung **16** (vergleiche **Figur 2**). Durch diese läuft das gesammelte Wasser aus dem Auffangbehälter **02** über den Ablaufschlauch **13** beispielsweise in einen Bodenablauf (nicht gezeigt) ab. An seinem freien Ende weist der Ablaufschlauch ein Absperrventil **16** (beispielsweise Kugelhahn) zum Öffnen und Verschließen des Ablaufschlauchs **13** auf. Da der Auffangbehälter **02** an seinem oberen Ende offen ausgebildet ist, läuft das Wasser ohne weitere Belüftungsmaßnahmen bei geöffnetem Ablaufschlauch **13** einfach durch Schwerkrafteinwirkung aus dem Auffangbehälter **02** heraus.

Zum Ablauf des gesammelten Wassers aus dem Auffangbehälter **02** ausschließlich durch Schwerkraft ist es erforderlich, dass sich das offene (öffenbare) Ende des Ablaufschlauchs **13** unterhalb des Bodens des Auffangbehälters **02** befindet. Der Auffangbehälter **02** ist daher erhöht in einem Gestell **17** angeordnet. Der Ablaufschlauch **13** muss mit seinem freien Ende zum vollständigen Entleeren einfach nur unterhalb des Doppelbodens **15** gehalten werden.

Weiterhin ist in der **Figur 1** eine Bodenplatte **18** als Teil des Gestells **17** dargestellt. Die Bodenplatte **18** ist auf vier feststellbaren Lenkrollen **19** gelagert. Durch diese ist das Prüfgerät **01** einfach manövrier- und fixierbar. Seitlich sind auf der Bodenplatte **18** noch eine Halterung **21,** beispielsweise für einen Messbecher, und ein weiterer Handgriff **22** zum Lenken angeordnet. Schließlich stehen auf der Bodenplatte **18** noch ein Eimer **23** und ein Wischmopp **24** zur Beseitigung von eventuell auftretenden Bodenpfützen bei der Prüfung. Auf dem Auffangbehälter **02** ist noch ein Kurzzeitmesser **25** angeordnet, mit dessen Hilfe die Ausflussgeschwindigkeit des Wassers aus der geprüften Notfalldusche ermittelt werden kann.

Die **Figur 2** (hier nicht erwähnte Bezugszeichen sind den anderen Figuren und der Beschreibungen zu entnehmen) zeigt das Notfallduschen-Prüfgerät **01** mit einem voll ausgefahrenen Einlaufrohr **03** (von der Rückseite gegenüber **Figur 1****).** Das Gegengewicht **07** befindet sich in seiner untersten Position. Das Prüfgerät **01** wird an die zu prüfende Notfalldusche herangefahren und unter dem Duschkopf (schematisch dargestellt) positioniert. Anschließend wird das Einlaufrohr **03** so weit nach oben verfahren, dass die Aufnahme **04** den Duschkopf vollständig aufnimmt (schematisch dargestellt). Nach erfolgter Prüfung wird das Einlaufrohr **03** wieder eingefahren und das Prüfgerät **01** zur nächsten Notfalldusche oder zur Entleerungsstelle verfahren.

In **Figur 2** ist noch gut zu erkennen, dass die Gleit- und Zentrierblöcke **08** gleichzeitig auch als Anschlag dienen, damit das Einlaufrohr **03** nicht versehentlich völlig aus dem Auffangrohr **02** herausgezogen wird. Weiterhin ist noch eine weitere Klemme **26** dargestellt, in die das Ende des Ablaufschlauchs **14** eingeklemmt werden kann, wenn er nicht gebraucht wird. So ist der Ablaufschlauch **13** sicher fixiert und Stolperunfälle werden vermieden.

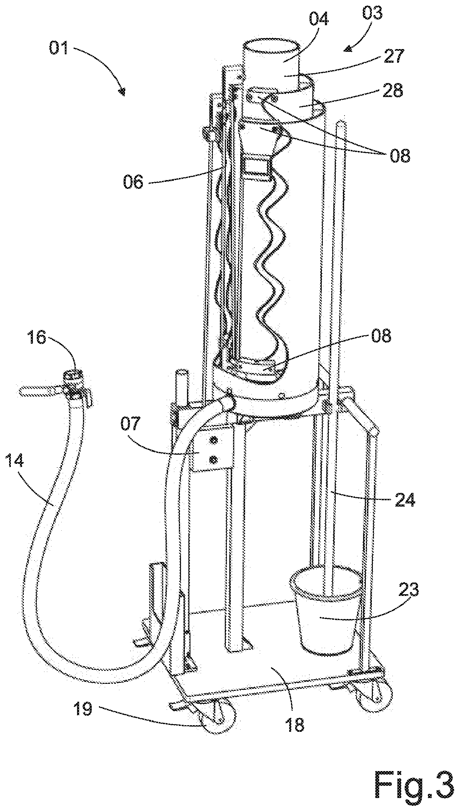

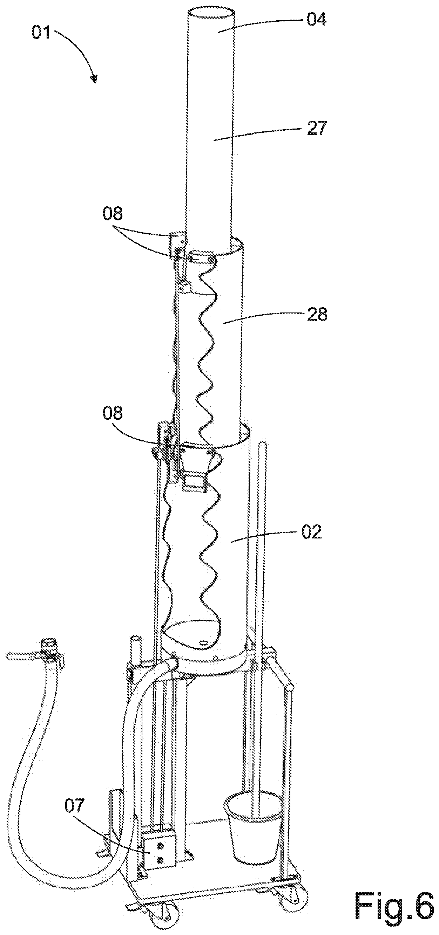

In der **Figur 3** ist das Prüfgerät **01** mit einem mehrteiligen Einlaufrohr **03** in eingefahrenem Zustand dargestellt. Dieses wird eingesetzt, um größeren Ausfahrhöhen erreichen zu können. Im dargestellten Ausführungsbeispiel besteht das Einlaufrohr **03** aus zwei Teilrohren **27, 28,** die teleskopartig aus- und eingefahren werden können. Dabei verläuft das innere Teilrohr **27** konzentrisch im äu-ßeren Teilrohr **28**. Entsprechend ist der Durchmesser des inneren Teilrohrs **27** kleiner als der Durchmesser des äußeren Teilrohrs **28**. Das innere Teilrohr **27** befindet sich im ausgefahren Zustand (vergleiche **Figur 6**) ganz oben und trägt dementsprechend die Aufnahme **04** zur Umfassung des zu prüfenden Duschkopfs. Auch bei mehr als zwei Teilrohren **27, 28** trägt immer das innerste Teilrohr **27** die Aufnahme **04** und bildet das am höchsten ausgefahrene Teilrohr **27**. Zur konzentrischen Führen und als Gleithilfe sind auch zwischen allen Teilrohren **27, 28** Zentrier- und Gleitböcke **08** vorgesehen. Die Gleit- und Zentrierblöcke **08** zwischen den Teilrohren **27, 28** sind im gezeigten Ausführungsbeispiel genauso angeordnet wie zwischen dem Teilrohr **28** (entspricht dem Einlaufrohr **03** bei einrohriger Ausführung) und dem Auffangbehälter **02**.

Das Seil **06** wird entsprechend mehrfach umgelenkt. Es beginnt immer am unteren Ende des innersten Teilrohrs **27**, wird dann über den Rand des weiter au-ßen liegenden, nächsten Teilrohrs **28** an dessen Außenseite in dessen unteren Bereich ein zweites Mal umgelenkt und dann über seinen oberen Rand hinweg wieder nach unten zum Gegengewicht **07** geleitet. Bei mehr als zwei Teilrohren **27, 28**. wird das Seil **06** entsprechend häufiger, aber in derselben Weise umgelenkt. Es ist aber mit jedem Teilrohr **27,28** immer an dessen unterem Rand fest verbunden. Das Gegengewicht **07** kompensiert das Gewicht aller Teilrohre **27,28** und ist entsprechend größer dimensioniert als bei der einstückigen Ausbildung des Einlaufrohrs **03** gemäß **Figuren 1****,** **2****.**

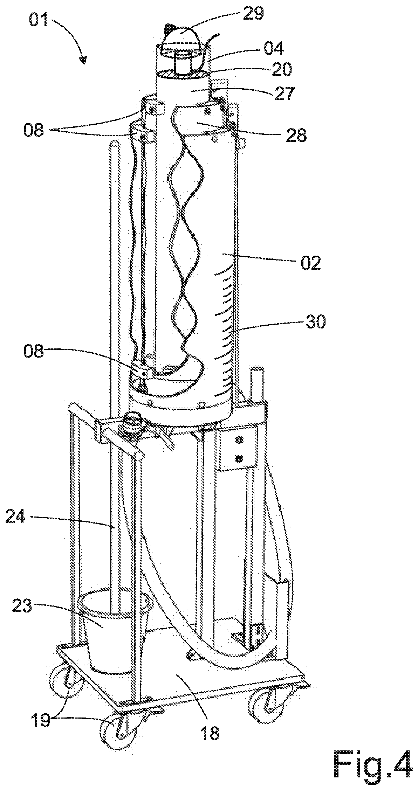

Die **Figur 4** zeigt das Prüfgerät **01** mit einem zweiteiligen Einlaufrohr **03** aus Teilrohren **27, 28** in der rückwärtigen Ansicht im eingefahrenen Zustand. Zusätzlich ist in der **Figur 4** eine Abdeckhaube **29** dargestellt, die bei der Prüfung von Augen-Notfallduschen (schematisch dargestellt) eingesetzt werden kann. Da diese nach oben abstrahlen, wird das Wasser über die Abdeckhaube **29,** die einfach manuell über die Aufnahme **04** gehalten wird, in das Innere des Einlaufrohrs **03** zurückgelenkt. Die Augen-Notfalldusche (schematisch dargestellt) kann entweder in die Aufnahme **04** hineingehalten oder auf einem Gitter **20,** das für diesen Zweck in die Aufnahme **04** eingehängt werden kann, abgelegt werden. Alternativ kann auch ein durchsichtiger Messbecher (Volumen ca. 3 I), der an die Halterung **21** angehängt werden kann (in der **Figur 4** nicht dargestellt), zur Prüfung einer Augendusche eingesetzt werden. Desweiteren zeigt die **Figur 4** eine analoge Füllstandanzeige **30** auf dem Auffangbehälter **02**. Eine elektronische Überwachung der Füllstandshöhe ist natürlich ebenfalls möglich.

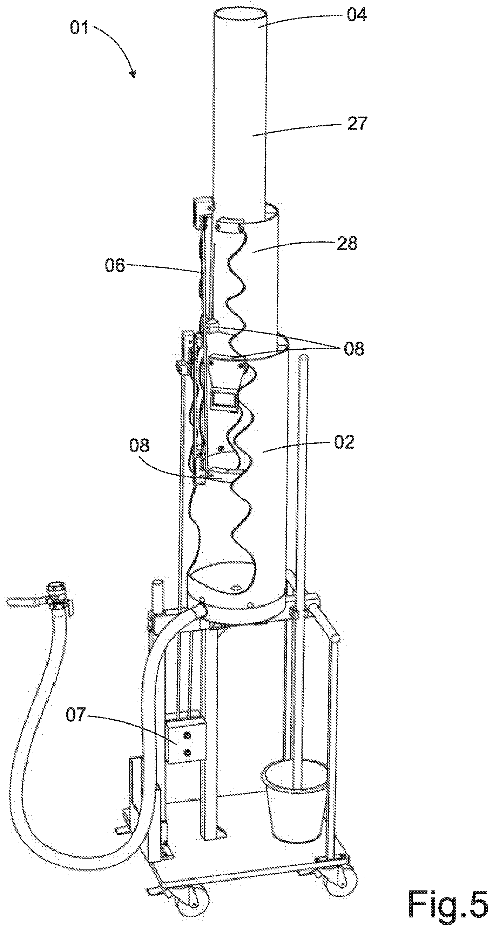

Die **Figur 5** zeigt das Prüfgerät **01** mit einem zweiteiligen Einlaufrohr **03** aus Teilrohren **27, 28** in einem teilweise ausgefahrenen Zustand. Das Gegengewicht **07** befindet sich in einer Mittelstellung. In der **Figur 6** ist das zweiteilige Einlaufrohr **02** voll ausgefahren. Das Gegengewicht **07** befindet sich in seiner untersten Stellung. Eine beachtliche Höhe kann für die Positionierung der Aufnahme **04** im innersten Teilrohr **27** erreicht werden, wobei trotzdem eine gute Stabilität erreicht ist. Im eingefahrenen Zustand befinden sich alle Teilrohre **27, 28** wieder innerhalb des Auffangbehälters **02,** sodass das mit der Erfindung beanspruchte Prüfgerät **01** neben seiner besonders einfachen und leichten Bedienbarkeit auch weiterhin sehr kompakt und gut transportier- und lagerbar ist.

### Bezugszeichenliste

- **01**: Notfallduschen-Prüfgerät
- **02**: Auffangbehälter
- **03**: Einlaufrohr
- **04**: Aufnahme
- **05**: Verstelleinrichtung
- **06**: Seil
- **07**: Gegengewicht
- **08**: Gleit- und Zentrierblock
- **09**: Umlenkblock
- **10**: Curryklemme
- **11**: Führungsschiene
- **12**: Handgriff
- **13**: Ablaufvorrichtung
- **14**: Ablaufschlauch
- **15**: Doppelboden
- **16**: Absperrventil
- **17**: Gestell
- **18**: Bodenplatte
- **19**: Lenkrolle
- **20**: Gitter
- **21**: Halterung
- **22**: weiterer Handgriff
- **23**: Eimer
- **24**: Wischmopp
- **25**: Kurzzeitmesser
- **26**: Klemme
- **27**: inneres Teilrohr
- **28**: nächstes Teilrohr
- **29**: Abdeckhaube
- **30**: Füllstandsanzeige

## Patentansprüche

1. Notfallduschen-Prüfgerät (01) mit einem Auffangbehälter (02) und einem Einlaufrohr (03), das an seinem oberen Ende eine Aufnahme (04) für den Kopf einer zu prüfenden Notfalldusche aufweist, an seinem unteren Ende in den Auffangbehälter (02) mündet und mittels einer arretierbaren Verstelleinrichtung (05) höhenverstellbar ausgebildet ist, wobei das Einlaufrohr (03) weitgehend in den Auffangbehälter (02) einfahrbar ist, und mit einer im unteren Bereich des Auffangbehälters (02) angeordneten Ablaufvorrichtung (13) zur Entleerung des Auffangbehälters (02),
wobei
die Aufnahme (04) in das obere Ende des Einlaufrohrs (03) integriert ist, **dadurch gekennzeichnet, dass**
das Einlaufrohr (03) einen solchen konstanten Durchmesser aufweist, dass es den Kopf der Notfalldusche vollständig aufnehmen kann, dass die Verstelleinrichtung (05) ein umgelenktes Seil (06) mit einem Gegengewicht (07) umfasst, das an das Gewicht (07) des Einlaufrohrs (03) angepasst ist, und dass ein Gestell (17) vorgesehen ist, in dem der Auffangbehälter (02) erhöht angeordnet ist, wobei die Ablaufvorrichtung (13) ausschließlich auf der Schwerkraft basiert.

2. Notfallduschen-Prüfgerät (1) nach Anspruch 1,
**dadurch gekennzeichnet, dass**
das Einlaufrohr (03) aus zumindest zwei konzentrischen Teilrohren (27, 28) aufgebaut ist, die teleskopartig ein- und ausfahrbar ausgebildet sind, wobei das innere Teilrohr (27) die Aufnahme (04) umfasst und das Seil (06) der Verstelleinrichtung (05) mit beiden Teilrohren (27, 28) verbunden ist.

3. Notfallduschen-Prüfgerät (1) nach Anspruch 1 oder 2,
**dadurch gekennzeichnet, dass**
der Auffangbehälter (02) zylindrisch und an seinem oberen Ende offen ausgebildet ist

4. Notfallduschen-Prüfgerät (1) nach einem der vorangehenden Ansprüche,
**dadurch gekennzeichnet, dass**
Gleit- und Zentrierblöcke (08) zwischen dem Einlaufrohr (03) und dem Auffangbehälter (02) angeordnet sind.

5. Notfallduschen-Prüfgerät (01) nach Anspruch 2 und 4,
**dadurch gekennzeichnet, dass**
Gleit- und Zentrierstücke (08) auch zwischen den konzentrischen Teilrohren (27, 28) angeordnet sind.

6. Notfallduschen-Prüfgerät (01) nach einem der vorangehenden Ansprüche,
**dadurch gekennzeichnet, dass**
zumindest die in das Einlaufrohr (03) integrierte Aufnahme (04) transparent ausgebildet ist.

7. Notfallduschen-Prüfgerät (01) nach einem der vorangehenden Ansprüche,
**dadurch gekennzeichnet, dass**
der Auffangbehälter (02) zumindest teilweise transparent ausgebildet ist.

8. Notfallduschen-Prüfgerät (01) nach einem der vorangehenden Ansprüche,
**dadurch gekennzeichnet, dass**
das Seil (06) der Verstelleinrichtung (05) als Handgriff (12) für die Höhenverstellung des Einlaufrohrs (03) dient und/oder mittels einer Curryklemme (10) arretierbar ist.

9. Notfallduschen-Prüfgerät (01) nach einem der vorangehenden Ansprüche,
**dadurch gekennzeichnet, dass**
das Gegengewicht (07) zwischen Führungsschienen (11) am Gestell (17) vertikal verschiebbar angeordnet ist.

10. Notfallduschen-Prüfgerät (01) nach einem der vorangehenden Ansprüche,
**dadurch gekennzeichnet, dass**
die Ablaufvorrichtung (13) einen Ablaufschlauch (14) mit einem großen Durchmesser und einem Absperrventil (16) an seinem freien Ende umfasst.

11. Notfallduschen-Prüfgerät (01) nach einem der vorangehenden Ansprüche,
**dadurch gekennzeichnet, dass**
das Gestell (17) eine Bodenplatte (18) mit feststellbaren Lenkrollen (19), einen weiteren Handgriff (22) und verschiedene Halterungen (21) für weitere Gerätschaften und Informationsmaterial umfasst.

12. Notfallduschen-Prüfgerät (01) nach einem der vorangehenden Ansprüche,
**dadurch gekennzeichnet, dass**
ein Kurzzeitmesser (25) und eine Füllstandsanzeige (30) am Auffangbehälter (02) angeordnet sind.

13. Notfallduschen-Prüfgerät (01) nach einem der vorangehenden Ansprüche,
**dadurch gekennzeichnet, dass**
eine Abdeckhaube (29) für die in das Einlaufrohr (03) integrierte Aufnahme (04) vorgesehen ist.

## Claims

1. An emergency shower test device (01) with a collection container (02) and an inlet pipe (03), which on its upper end has a receptacle (04) for the head of an emergency shower to be tested, leads into the collection container (02) on its lower end and is designed so as to be height-adjustable by means of a lockable adjusting apparatus (05), wherein the inlet pipe (03) can be largely moved into the collection container (02), and with a drainage device (13) that is arranged in the lower region of the collection container (02) and serves for emptying the collection container (02), wherein the receptacle (04) is integrated into the upper end of the inlet pipe (03), **characterized in that**
the inlet pipe (03) has such a constant diameter that it can completely receive the head of the emergency shower, **in that** the adjusting apparatus (05) comprises a deflected cable (06) with a counterweight (07), which is adapted to the weight (07) of the inlet pipe (03), and **in that** a frame (17) is provided, in which the collection container (02) is arranged in an elevated manner, wherein the drainage device (13) is based exclusively on gravity.

2. The emergency shower test device (1) according to claim 1,
**characterized in that**
the inlet pipe (03) is composed of at least two concentric partial pipes (27, 28), which can be telescopically retracted and extended, wherein the inner partial pipe (27) comprises the receptacle (04) and the cable (06) of the adjusting apparatus (05) is connected to both partial pipes (27, 28).

3. The emergency shower test device (1) according to claim 1 or 2,
**characterized in that**
the collection container (02) is designed cylindrically and open on its upper end.

4. The emergency shower test device (1) according to one of the preceding claims,
**characterized in that**
sliding and centering blocks (08) are arranged between the inlet pipe (03) and the collection container (02).

5. The emergency shower test device (01) according to claims 2 and 4,
**characterized in that**
sliding and centering elements (08) are also arranged between the concentric partial pipes (27, 28).

6. The emergency shower test device (01) according to one of the preceding claims,
**characterized in that**
at least the receptacle (04) integrated into the inlet pipe (03) is designed transparently.

7. The emergency shower test device (01) according to one of the preceding claims,
**characterized in that**
the collection container (02) is at least partially designed transparently.

8. The emergency shower test device (01) according to one of the preceding claims,
**characterized in that**
the cable (06) of the adjusting apparatus (05) serves as a handle (12) for the height adjustment of the inlet pipe (03) and/or can be locked by means of a cam cleat (10).

9. The emergency shower test device (01) according to one of the preceding claims,
**characterized in that**
the counterweight (07) is arranged on the frame (17) so as to be vertically displaceable between guide rails (11).

10. The emergency shower test device (01) according to one of the preceding claims,
**characterized in that**
the drainage device (13) comprises a drain hose (14) with a large diameter and a shutoff valve (16) on its free end.

11. The emergency shower test device (01) according to one of the preceding claims,
**characterized in that**
the frame (17) comprises a bottom plate (18) with lockable casters (19), an additional handle (22) and different fixtures (21) for additional equipment and information material.

12. The emergency shower test device (01) according to one of the preceding claims,
**characterized in that**
a microchronometer (25) and a level indicator (30) are arranged on the collection container (02).

13. The emergency shower test device (01) according to one of the preceding claims,
**characterized in that**
a cover hood (29) is provided for the receptacle (04) integrated into the inlet pipe (03).

## Revendications

1. Appareil de test (01) de douches d'urgence, pourvu d'un récipient collecteur (02) et d'un tube d'entrée (03), qui sur son extrémité supérieure comporte un logement (04) pour le pommeau d'une douche d'urgence qui doit être testée, sur son extrémité inférieure débouche dans le récipient collecteur (02) et est conçu en étant réglable en hauteur au moyen d'un système de réglage (05) susceptible d'être bloqué, le tube d'entrée (03) pouvant pénétrer loin dans le récipient collecteur (02) et pourvu d'un dispositif d'écoulement (13), placé dans la zone inférieure du récipient collecteur (02) pour vider le récipient collecteur (02),
le logement (04) étant intégré dans l'extrémité supérieure du tube d'entrée (03),
**caractérisé en ce que** le tube d'entrée (03) présente un diamètre si constant qu'il puisse recevoir totalement le pommeau de la douche d'urgence, **en ce que** le système de réglage (05) comprend un câble (06) dévié doté d'un contrepoids (07) qui est adapté au poids (07) du tube d'entrée (03) et **en ce qu'**il est prévu une armature (17) dans laquelle le récipient collecteur (02) est placé en étant surélevé, le dispositif d'écoulement (13) étant basé exclusivement sur la force de gravité.

2. Appareil de test (1) de douches d'urgence selon la revendication 1,
**caractérisé**
**en ce que** le tube d'entrée (03) est structuré en au moins deux tubes partiels (27, 28) concentriques, qui sont conçus en étant rétractables et déployables de manière télescopique, le tube partiel (27) intérieur comprenant le logement (04) et le câble (06) du système de réglage (05) étant relié avec les deux tubes partiels (27, 28).

3. Appareil de test (1) de douches d'urgence selon la revendication 1 ou 2,
**caractérisé**
**en ce que** le récipient collecteur (02) est conçu de forme cylindrique et en étant ouvert sur son extrémité supérieure.

4. Appareil de test (1) de douches d'urgence selon l'une quelconque des revendications précédentes,
**caractérisé**
**en ce que** des blocs de coulissement et de centrage (08) sont placés entre le tube d'entrée (03) et le récipient collecteur (02).

5. Appareil de test (01) de douches d'urgence selon la revendication 2 et 4,
**caractérisé**
**en ce que** des pièces de coulissement et de centrage (08) sont également placées entre les tubes partiels (27, 28) concentriques.

6. Appareil de test (01) de douches d'urgence selon l'une quelconque des revendications précédentes,
**caractérisé**
**en ce qu'**au moins le logement (04) intégré dans le tube d'entrée (03) est conçu en étant transparent.

7. Appareil de test (01) de douches d'urgence selon l'une quelconque des revendications précédentes,
**caractérisé**
**en ce que** le récipient collecteur (02) est conçu en étant au moins partiellement transparent.

8. Appareil de test (01) de douches d'urgence selon l'une quelconque des revendications précédentes,
**caractérisé**
**en ce que** le câble (06) du système de réglage (05) fait office de poignée (12) pour le réglage en hauteur du tube d'entrée (03) et / ou peut se bloquer à l'aide d'un taquet coinceur (10).

9. Appareil de test (01) de douches d'urgence selon l'une quelconque des revendications précédentes,
**caractérisé**
**en ce que** le contrepoids (07) est placé sur l'armature (17) en étant déplaçable à la verticale entre des rails de guidage (11).

10. Appareil de test (01) de douches d'urgence selon l'une quelconque des revendications précédentes,
**caractérisé**
**en ce que** le dispositif d'écoulement (13) comprend un flexible d'écoulement (14) de grand diamètre et une soupape d'arrêt (16) sur son extrémité libre.

11. Appareil de test (01) de douches d'urgence selon l'une quelconque des revendications précédentes,
**caractérisé**
**en ce que** l'armature (17) comprend une plaque d'embase (18) dotée de roulettes (19) pivotantes blocables, une poignée (22) supplémentaire et différents supports (21) pour d'autres appareillages et du matériel d'information.

12. Appareil de test (01) de douches d'urgence selon l'une quelconque des revendications précédentes,
**caractérisé**
**en ce qu'**un minuteur (25) et un indicateur de niveau (30) sont placés sur le récipient collecteur (02).

13. Appareil de test (01) de douches d'urgence selon l'une quelconque des revendications précédentes,
**caractérisé**
**en ce qu'**il est prévu un capot de protection (29) pour le logement (04) intégré dans le tube d'entrée (03).
